Europäisches Patentamt

European Patent Office

Office européen des brevets

(19)

(11) Veröffentlichungsnummer: **0 372 224**
**A2**

(12) # EUROPÄISCHE PATENTANMELDUNG

(21) Anmeldenummer: **89120263.2**

(51) Int. Cl.⁵: **G02B 5/02, F21V 3/04**

(22) Anmeldetag: **02.11.89**

(30) Priorität: **02.12.88 DE 3840632**

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **Kempf, Georg-Ulrich**
**Augustastrasse 8**
**D-2057 Wentorf(DE)**

Anmelder: **Schüler, Egon**
**Motzstrasse 60**
**D-1000 Berlin 30(DE)**

(72) Erfinder: **Kempf, Georg-Ulrich**
**Augustastrasse 8**
**D-2057 Wentorf(DE)**
Erfinder: **Schüler, Egon**
**Motzstrasse 60**
**D-1000 Berlin 30(DE)**

(74) Vertreter: **Dipl.-Ing. H. Hauck Dipl.-Ing. E.**
**Graalfs Dipl.-Ing. W. Wehnert Dr.-Ing. W.**
**Döring**
**Neuer Wall 41**
**D-2000 Hamburg 36(DE)**

(54) **Streuscheibe.**

(57) Transluzente Scheibe zur Erzeugung von Streulicht, wobei sie aus einem hitzebeständigen, lichtdurchlässigen Kunststoff-Flachmaterial aus der Gruppe der Fluorelastomere oder Fluorkohlenstoffharze besteht.

EP 0 372 224 A2

FIG.1

## Streuscheibe

Die Erfindung bezieht sich auf eine transluzente Scheibe zur Erzeugung von Streulicht.

Unter Streulicht versteht man Licht, das bei einem Durchgang durch ein Medium in alle Richtungen gestreut wird, besonders gut zu beobachten z.B. im Falle von dunstigem Licht, das entsteht, wenn Sonnenlicht auf in der Luft befindliche Staub- und Smogpartikel trifft. Künstlich läßt sich Streulicht dadurch erzeugen, daß man das von einer Lichtquelle ausgehende Licht durch getrübte lichtdurchlässige Flüssigkeiten, Gase oder Festkörper hindurchstrahlt.

Die Verwendung solcher Streulicht erzeugenden Materialien ist weit verbreitet. Am besten bekannt sind sogenannte Milchglasscheiben, wie sie z.B. in Türen und bei Fenster etc. anzutreffen sind. Milchglas wird immer dann eingesetzt, wenn aus Beleuchtungsgründen zwar der Wunsch nach Lichtdurchlässigkeit besteht, jedoch eine Durchsichtigkeit nicht erwünscht ist, wie z.B. bei Badezimmerfenstern.

Weiterhin wird milchig eingetrübtes Glas auch als Streuscheibe auf Leuchttischen bzw. bei Leuchtstoffröhren verwendet. Im Fall der Leuchttische soll das in der Regel von mehreren Lichtquellen ausgehende Licht durch die Milchglasscheibe gleichmäßig gestreut werden, so daß eine flächige Strahlung entsteht, die in allen Bereichen eine im wesentlichen gleiche Intensität aufweist. Bei der Leuchtstoffröhre erzeugt das durch das Milchglas gefilterte Streulicht einen weicheren Eindruck.

Streulichtscheiben werden häufig in unmittelbarer Nähe von Lichtquellen angeordnet. Sie müssen daher so beschaffen sein, daß sie die dort auftretenden Temperaturen, die in einigen Fällen mehrere 100°C betragen, ohne Beeinträchtigung des Materials aus dem sie bestehen, aushalten.

Es hat sich herausgestellt, daß die unterschiedliche Lichtintensitätsverteilung bei optischen Projektoren, z.B. Dia-Projektoren oder Mikroskopbeleuchtung, in manchen Anwendungsfällen nicht hingenommen werden kann. Das menschliche Auge nimmt die Unterschiede zumeist nicht wahr. Im Gegensatz dazu werden sie z.B. von elektro-optischen Abtastvorrichtungen erfaßt und beeinträchtigen die Abbildung. Dies ist z.B. der Fall bei dem Kopieren von Diapositiven, bei dem ein Dia-Projektor an einem Kopiergerät angeordnet ist (Prospekt "Color-Laser" der Fa. Canon oder DE-OS 37 11 701). Die hell strahlende Lampe des Projektors erzeugt einen sogenannten Hot-Spot, der die Qualität der Kopie stark beeinträchtigt. Die Vergleichmäßigung der Lichtintensitätsverteilung mit Hilfe konventioneller Streuscheiben ist nicht möglich, da sie nicht ausreichend wärmebeständig sind; z.B. Streuscheiben aus Milchglas zerplatzen bei höheren Temperaturen.

Aufgabe der Erfindung ist es daher, eine transluzente Streuscheibe bereitzustellen, die bei guter Lichtdurchlässigkeit besonders hitzeverträglich und langlebig ist und sich darüber hinaus gut verarbeiten läßt.

Gelöst wird diese Aufgabe durch die im Kennzeichnungsteil des Anspruches 1 angegebenen Merkmale.

Danach wird eine Scheibe verwendet, die aus einem lichtdurchlässigen Kunststoffmaterial aus der Gruppe der Fluorelastomere bzw. Fluorkohlenstoffharze besteht.

Bevorzugt werden dabei die Materialien Polytetrafluorethylen, Polyperfluorethylenpropylen, Polychlortrifluorethylen und Copolymere von Vinylidenfluorid. Besonders bevorzugt ist dabei das unter dem Markennamen "Teflon" vertriebene Produkt.

Erfindungsgemäß kann die Streuscheibe als Filter ausgebildet werden, und damit in seiner Form in üblicher Weise in optischen Systemen verwendeten Filtern entsprechen. Das Streuscheibenmaterial kann verformt werden zur Bildung von im Winkel zueinander liegenden Streuflächen. Es können auch einzelne Streuscheiben an einem Rahmen angeordnet werden. So kann z.B. eine Filtereinheit L-Form, U-Form oder Kastenform haben.

Die Streuscheibe kann weiterhin z.B. durch Verformung, Pressen, Sintern oder spanabhebende Fertigung hergestellt werden, so daß ihr jede beliebige Form für eine gezielte Streu- und Absorptionswirkung gegeben werden kann.

Bei Verwendung mehrerer Lichtquellen, z.b. vier, kann eine verschränkte, wabenartige Anordnung von zwei oder mehr senkreoht zueinander angeordneten Scheiben vorgesehen werden. In diesem Fall können die durch die Scheibenflächen geschaffenen Fächer die Lichtquellen aufnehmen.

Darüber hinaus läßt sich die Streuscheibe jedoch auch in Form einer Folie ausbilden, und kann z.B. zur Beschichtung eines Reflektors verwendet werden.

In einer weiteren Ausgestaltung der Erfindung ist vorgesehen, das Streumaterial direkt in Form einer Beschichtung auf die Lichtquelle, z.B. eine Birne aufzubringen.

Eine besonders bevorzugte Ausgestaltung sieht vor, die erfindungsgemäße Streuscheibe in einem Diaprojektor anzuordnen. Wie bereits erwähnt, kann bei der in herkömmlichen Diaprojektoren verwendeten Linsenoptik häufig nicht gewährleistet werden, daß die Diavorlage über ihre gesamte Fläche mit Licht gleicher Intensität durchstrahlt wird. Erfindungsgemäß wird ein in der Regel scheibenförmig ausgebildetes transluzentes Material zwischen der Lichtquelle und der Linsenoptik und/oder zwischen der Lichtquelle und einem ihr zugeordneten Reflektor angeordnet. Um eine höhere Intensität zu erhalten, können Diaprojektoren mit mehreren Lichtquellen versehen werden. In diesem Fall können auch mehrere Scheiben dieser Art in den Strahlengang eingebracht werden, beispielsweise eine zwischen der hinteren Lichtquelle und dem ihr zugeordneten Reflektor und eine zwischen der vorderen und der ersten optischen Linse. Selbstverständlich können auch jeder Lichtquelle einzeln eine Streuscheibe zugeordnet werden.

Bei einem weiteren Anwendungsfall kann die Streuscheibe für Lichtkästen vorgesehen werden, wie sie z.B. bei der Betrachtung von Röntgenaufnahmen in Arztpraxen und Kliniken sowie in Materialprüfverfahren eingesetzt werden. Bisher können in solchen Kästen nur Kaltlichtquellen verwendet werden, da sonst die Milchglasscheibe zerplatzt. Im Gegensatz dazu können unter Verwendung der erfindungsgemäßen hitzebeständigen Streulichtscheibe nun auch Warmlichtquellen eingesetzt werden, wodurch eine bedeutende Erhöhung der Lichtintensität möglich ist.

Außerdem können die erfindungsgemäßen Streulichtscheiben in den bei fotografischen Vergrößerungsgeräten anzutreffenden Mischboxen verwendet werden. Derartige Mischboxen sind innen mit Spiegeln, Viskose oder Polystyrol versehen. Durch eine oder mehrere Öffnungen wird gerichtetes Licht in die Mischbox hineingestrahlt. Das Licht tritt ungerichtetet oder über eine optische Anordnung gerichtet aus der Misch box aus, z.B. um eine Vorlage über ein Negativ zu belichten. An den Wänden und der Rückseite sowie als Trennung in der Mischbox ist das erfindungsgemäße Material angeordnet.

Die Erfindung soll im folgenden anhand bevorzugter Ausgestaltungen näher erläutert werden.

Dabei zeigt,

Fig. 1 schematisch eine elektrofotografische Kopiervorrichtung, bestehend aus einem Kopierer und einem Diaprojektor,

Fig. 2a-c schematisch mögliche Anordnungen mehrerer Lichtquellen und zugeordneter Filter in einem Diaprojektor, wie er in der Anordnung aus Fig. 1 verwendet werden kann und

Fig. 3 in Querschnittsansicht eine Mischbox, die mit den erfindungsgemäßen Filtern versehen ist.

Fig. 4 das erfindungsgemäße Filter in Verbindung mit einer Fresnel-Linse.

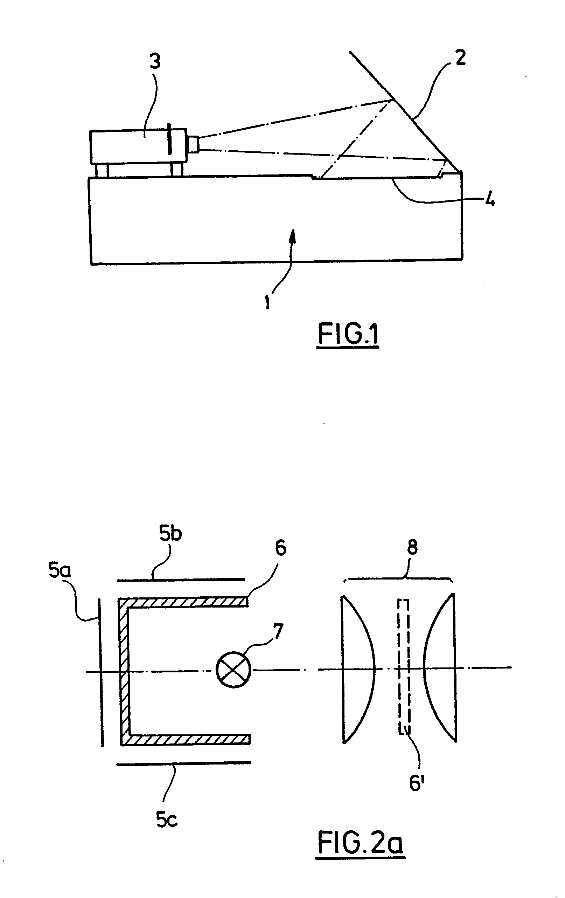

Fig. 1 zeigt einen Kopierer 1, auf den ein Diaprojektor 3 aufgesetzt ist. Der Strahl des Projektors 3 gelangt auf einen Umlenkspiegel 2, der ihn zu einem Eintrittsfenster 4 des Kopierers 1 umlenkt. Der Kopiervorgang erfolgt dann in üblicher Weise. Mit einer solchen Vorrichtung ist es möglich, Papierabzüge im Vergleich zur chemofotografischen Reproduktion deutlich schneller herzustellen.

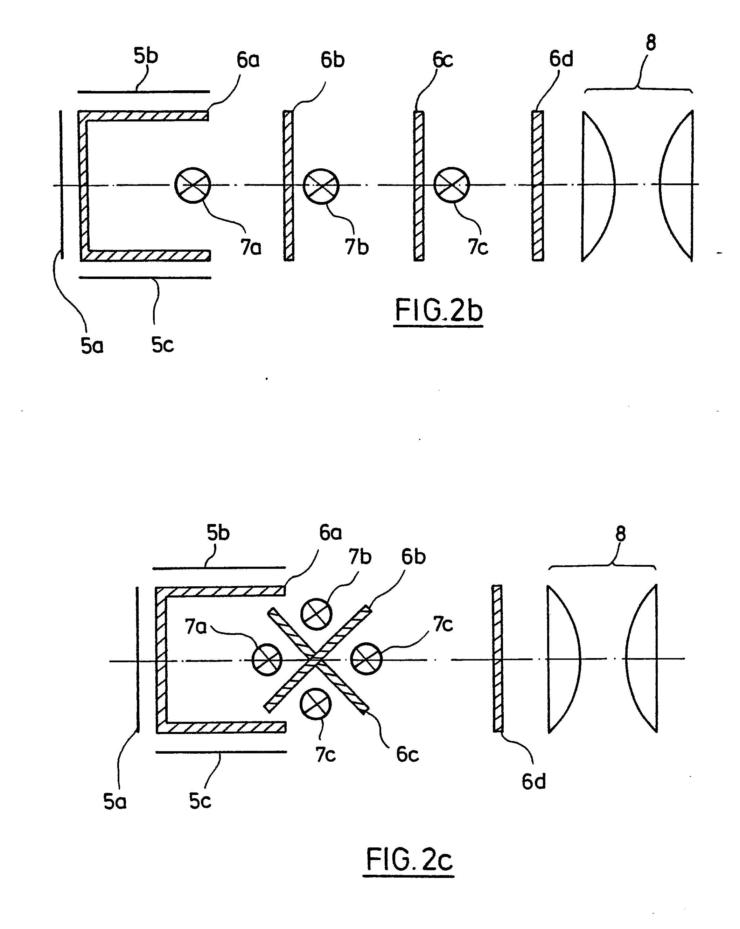

Fig. 2a-c zeigen nun schematisch eine Vorrichtung zur Erzeugung eines Streulichtprojektionsstrahles in dem Diaprojektor 3, in dem die eingangs beschriebenen Intensitätsunterschiede nicht mehr auftreten. Als Lichtquellen dienen dabei Lampen 7. In den Abbildungen 2a ist eine, in den Abbildungen 2b und c sind mehrere Lampen 7 zu der gestrichelt eingezeichneten Mittelachse einer schematisch dargestellten Linsenoptik 8 ausgerichtet. Fig. 2a zeigt, daß zwischen der Lampe 7 und einem Reflektor 5 eine erfindungsgemäße Streuscheibe 6 angeordnet ist. Die Scheibe 6 besitzt U-Form und kann z.B. aus einem einzigen Zuschnitt aus Teflonmaterial hergestellt werden. Der Schenkel des U-förmigen Filters kann auch länger bzw. mit anderem Winkel zu dem Steg ausgebildet werden. Eine weitere, gestrichelt eingezeichnete, Streuscheibe 6, ist zwischen den Kondensorlinsen der Linsenoptik 8 angeordnet. Sie dient in erster Linie der Wärmedämmung.

Fig. 2b zeigt eine Anordnung mehrerer Streuscheiben, wie sie bei Vorhandensein mehrerer Lichtquellen im Diaprojektor vorgesehen werden kann. In diesem Fall sind in Richtung des Projektionsstrahles gesehen hinter jeder Lichtquelle 7a, b und c Filter 6a, b und c angeordnet. Zusätzlich ist zwischen der Lichtquelle 7c und der zugeordneten Linsenoptik 8 eine weiterere Streuscheibe 6d angeordnet. Die Aufgabe der Filter 6b und 6c besteht zusätzlich in der Dämmung der von den Lichtquellen ausgehenden Wärme.

Fig. 2c zeigt eine Streueinheit, die aus den miteinander verschränkten Streuscheiben 6b und 6c besteht. Die Lichtquellen 7a-d sind in den durch die angrenzenden Streuscheibenflächen definierten offenen Fächern angeordnet.

Die in den Fig. 2a-c dargestellte Anordnung der Streuscheiben 6 ist lediglich beispielhaft. Es kann auch jeder einzelnen Leuchte jeweils eine Streuscheibe zugeordnet werden bzw. nur eine Streuscheibe in Reflektornähe vorgesehen werden. Darüber hinaus kann der Projektor auch noch weitere Lichtquellen enthalten und diese anders angeordnet sein.

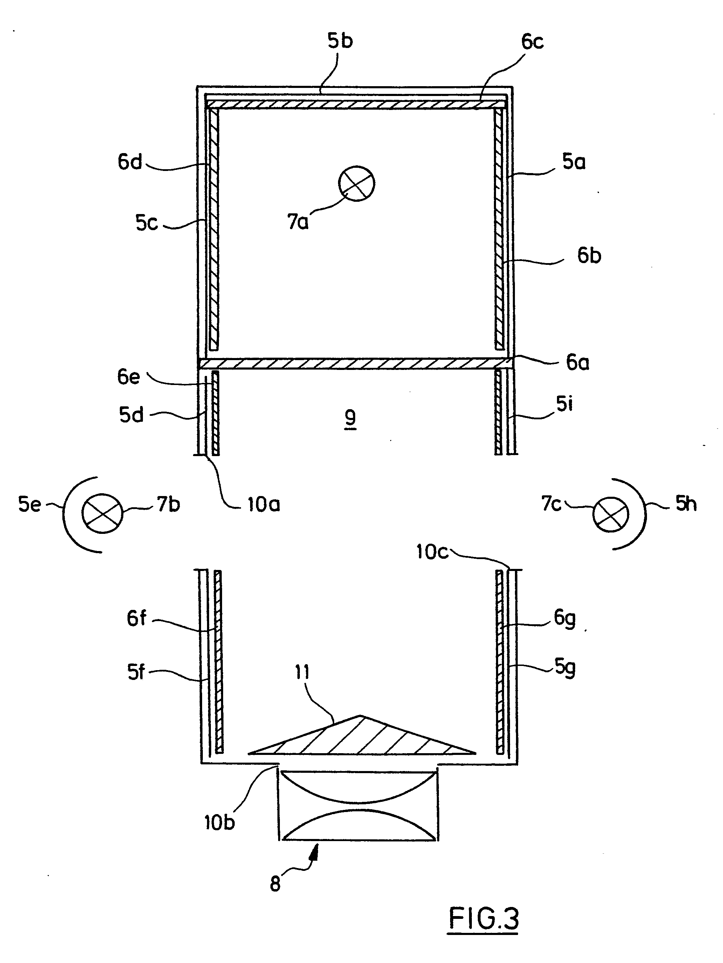

Fig. 3 zeigt nun die Anwendung der erfindungsgemäßen Streuscheibe in einer Mischbox 9, wie sie bei fotografischen Vergrößerungsgeräten Verwendung findet. Der Innenraum der Mischbox 9 wird durch eine Streuscheibe 6a in eine obere und eine untere Kammer unterteilt. An den Seiteninnenwänden sowie der Innenrückwand der oberen Kammer sind Spiegel 5a, b und c angeordnet. Zusätzlich sind vor dem Spiegel 5b Streuscheiben 6b, c und d angeordnet. Weiterhin ist in der oberen Kammer der Mischbox 9 eine Lampe 7a vorgesehen. In der unteren Kammer sind zwei seitliche Öffnungen 10a und c und eine untere Öffnung 10b vorgesehen. Den Öffnungen 10a und c sind außerhalb der Mischbox 9 befindliche mit Reflektoren 5e und h versehene Lichtquellen 7b und c zugeordnet. Die seitlichen Innenwände der unteren Kammer sind mit Spiegeln 5d, f, g und i und davor angeordneten Streuscheiben 6e-h verkleidet. Die Lichtaustrittsfläche 10b der Mischbox kann zusätzlich mit einer als Profilscheibe 11 ausgebildeten erfindungsgemäßen Streuscheibe abgeschlossen werden. Die in der unteren Öffnung 10b angeordnete Linsenoptik 8 sorgt schließlich dafür, daß das in der Mischbox 9 erzeugte Streulicht gerichtet austritt.

Es versteht sich, daß die in Fig. 3 gezeigte Mischbox lediglich beispielhaft für eine Ausführungsform der Erfindung steht. Auch hier können mehr bzw. weniger Lichtquellen bzw. eine andere Anordnung der Streuscheibe und Spiegel vorgesehen sein. Auch ist die Trennung in obere und untere Kammer nicht zwingend erforderlich.

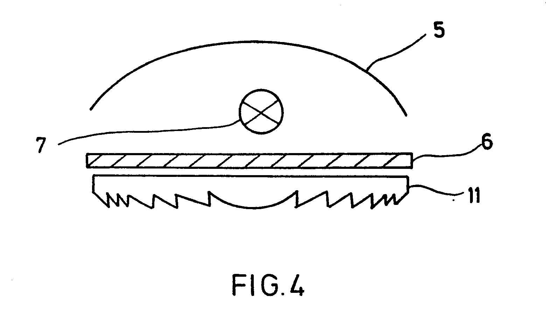

Ein letztes Ausführungsbeispiel der Erfindung ist in den Figuren 4a und b gezeigt. Hier ist die Streuscheibe 6 zwischen einer Lichtquelle 7, die mit einem Reflektor 5 ver sehen sein kann, und einer Fresnel-Linse 11 angeordnet. Eine solche Anordnung kann für beliebige Leuchten, z.B. Tischleuchten etc. vorgesehen werden. Die Fresnel-Linse kann dabei so geschliffen sein, daß das Licht parallel austritt, in anderen Fällen kann das austretende Licht auch gebündelt oder gestreut werden.

## Ansprüche

1. Transluzente Scheibe zur Erzeugung von Streulicht, dadurch gekennzeichnet, daß sie aus einem hitzebeständigen, lichtdurchlässigen Kunststoff-Flachmaterial aus der Gruppe der Fluorelastomere oder Fluorkohlenstoffharze besteht.

2. Scheibe nach Anspruch 1, dadurch gekennzeichnet, daß sie aus Polytetrafluorethylen, Polyperfluorethylenpropylen, Polychlortrifluorethylen oder Copolymeren von Vinylidenfluorid besteht.

3. Scheibe nach den Ansprüchen 1 und 2, dadurch gekennzeichnet, daß sie aus Teflon besteht.

4. Scheibe nach den Ansprüchen 1 bis 3, dadurch gekennzeichnet, daß die Scheibe durch Pressen, Sintern oder spanabhebende Fertigung hergestellt wird.

5. Scheibe nach den Ansprüchen 1 bis 4, dadurch gekennzeichnet, daß das Flachmaterial verformt ist zur Bildung von in einem Winkel zueinander liegenden Filterflächen.

6. Scheibe nach Anspruch 5, dadurch gekennzeichnet, daß sie annähernd L-förmig, U-förmig, kastenförmig oder dergleichen ist.

7. Scheibe nach den Ansprüchen 1 bis 4, dadurch gekennzeichnet, daß sie aus mindestens zwei getrennten Abschnitten gebildet ist, die im Winkel zueinander angeordnet sind.

8. Scheibe nach Anspruch 7, dadurch gekennzeichnet, daß die Abschnitte verschränkt angeordnet sind.

9. Scheibe nach den Ansprüchen 1 bis 4, dadurch gekennzeichnet, daß sie als Beschichtung auf eine Lichtquelle direkt aufgebracht wird.

10. Scheibe nach den Ansprüchen 1 bis 8, dadurch gekennzeichnet, daß sie einzeln oder zu mehreren in dem eine oder mehrere Lichtquellen aufweisenden Lichtweg eines Diaprojektors angeordnet ist.

11. Scheibe nach Anspruch 10, dadurch gekennzeichnet, daß sie in Richtung des Projektionsstrahles gesehen vor und/ oder hinter mindestens einer Lichtquelle angeordnet ist.

12. Scheibe nach Anspruch 11, dadurch gekennzeichnet, daß sie zwischen der einen Lichtquelle und einem ihr zugeordneten Reflektor angeordnet ist.

13. Scheibe nach den Ansprüchen 1 bis 4, dadurch gekennzeichnet daß sie vor mindestens einer in einem Lichtkasten angeordneten Lichtquelle vorgesehen ist.

14. Scheibe nach den Ansprüchen 1 bis 4, dadurch gekennzeichnet, daß sie in mindestens einer Lichteintrittsöffnung einer Mischbox für fotografische Vergrößerungsgeräte angeordnet wird.

15. Scheibe nach den Ansprüchen 1 bis 4 und 14, dadurch gekennzeichnet, daß sie in mindestens einer Lichtaustrittsöffnung einer Mischbox für fotografische Vergrösserungsgeräte angeordnet wird.

16. Scheibe nach den Ansprüchen 1 bis 4, dadurch gekennzeichnet, daß sie zwischen einer Lichtquelle und der glatten Fläche einer Fresnel-Linse angeordnet wird.

17. Verfahren zur Erzeugung von Streulicht, dadurch gekennzeichnet, daß das von einer oder mehreren Lichtquellen ausgehende Licht durch ein lichtdurchlässiges Kunststoffmaterial aus der Gruppe der Fluorelastomere oder Fluorkohlenstoffharze hindurchtritt.

FIG.1

FIG.2a

FIG.2b

FIG.2c

FIG.3

FIG.4